Europäisches Patentamt

European Patent Office

Office européen des brevets

(11) Veröffentlichungsnummer: **0 126 199**
**B1**

# EUROPÄISCHE PATENTSCHRIFT

(45) Veröffentlichungstag der Patentschrift:
08.06.88

(51) Int. Cl.⁴: **B 64 C 23/00**

(21) Anmeldenummer: **84100345.2**

(22) Anmeldetag: **14.01.84**

(54) **Tragflügel für Luftfahrzeuge.**

(30) Priorität: **20.05.83 DE 3318413**

(43) Veröffentlichungstag der Anmeldung:
**28.11.84 Patentblatt 84/48**

(45) Bekanntmachung des Hinweises auf die Patenterteilung:
**08.06.88 Patentblatt 88/23**

(84) Benannte Vertragsstaaten:
**FR GB IT NL**

(56) Entgegenhaltungen:
**GB-A-2 064 709**
**US-A-2 783 008**
**US-A-3 128 973**

(73) Patentinhaber: **Messerschmitt- Bölkow- Blohm GmbH, Hünefeldstrasse 1-5, D-2800 Bremen 1 (DE)**

(72) Erfinder: **Thiede, Peter, Prof. Dr., Ziegelweg 43, D-2875 Ganderkesee 2 (DE)**

(74) Vertreter: **Schramm, Ewald Werner Josef, Messerschmitt- Bölkow- Blohm GmbH Patentabteilung TW63 (TWB32) Postfach 10 78 45, D-2800 Bremen 1 (DE)**

## Beschreibung

Die Erfindung bezieht sich auf einen Tragflügel für Luftfahrzeuge mit überkritischer Profilierung, welcher auf der Oberseite in einem definierten Bereich der Profiltiefe eine Vorrichtung zur Beeinflussung des Verdichtungsstoßes aufweist, wie er z. B. durch die DE-A- 2949 133 bekannt ist.

Moderne Tragflügel mit überkritischer Profilierung besitzen auch bei Unterschallströmung ein ausgedehntes Überschallfeld auf der Profiloberseite. Bei diesen Tragflügeln erfolgt im Auslegefall eine nahezu stoßfreie Rekompression der Strömung vom Überschallbereich zum Unterschall. Außerhalb des Auslegezustandes (Off-design-Bereich), und zwar bei veränderten Machzahlen der Anströmung und/oder anderen Anstellwinkeln, treten bei derartigen Tragflügeln am Ende der Oberschallfelder Verdichtungsstöße auf, welche bei noch anliegender Strömung einen Anstieg des Widerstandes (Wellenwiderstand) verursachen. Die Stärke eines Verdichtungsstoßes und damit der Widerstand nimmt mit wachsender Abweichung vom Auslegefall zu, aber seine Lage in Richtung der Profiltiefe bleibt bei modernen überkritischen Profilierungen nahezu konstant.

Diese außerhalb des Auslegezustandes auftretenden Verdichtungsstöße beeinflussen die auf der Profiloberseite der überkritischen Tragflügel sich ausbildende Grenzschicht und schwächen sie ab einer bestimmten Stoßstärke soweit, daß die Grenzschicht sich entweder unmittelbar hinter dem Stoß oder als Folge weiteren Druckanstieges in Hinterkantennähe ablöst. Stoßinduzierte Ablösungen führen aber zu einem steilen Widerstandsanstieg und zum gefürchteten Schütteln und stellen daher eine Grenze für den Einsatzbereich überkritischer Tragflügel dar. Durch Absaugen der Grenzschicht im Bereich des Verdichtungsstoßes ist es, wie in der DE-A- 29 49 133 vorgeschlagen, möglich, die stoßinduzierte Grenzschichtablösung zu verzögern, das heißt, erst bei vergleichsweise großen Stoßstärken einsetzen zu lassen, aber die dort vorgeschlagenen Mittel sind im Hinblick auf die über der gesamten Flügelspannweite erforderlichen Absaugmaßnahmen und dem erzielbaren Nutzen unbefriedigend.

Der Erfindung liegt daher die Aufgabe zugrunde, bei einem Tragflügel überkritischer Profilierung eine Vorrichtung zur wirksamen Beeinflussung des Verdichtungsstoßes mit passiven Mitteln aufzubauen. Gemäß der Erfindung ist diese Aufgabe dadurch gelöst, daß die Vorrichtung als Ventilationsvorrichtung zum Ausgleich der Druckdifferenz zwischen Überschallfeld und Unterschallfeld ausgebildet ist, das die Ventilationsvorrichtung aus einem in Richtung der Flügelspannweite sich erstreckenden perforierten Wandstreifen mit darunter liegender Ausgleichskammer besteht und daß die Breite des perforierten Wandstreifens - in Richtung der Flügeltiefe gemessen - auf einen Wert zwischen 5 % und 20 % der örtlichen Flügeltiefe bemessen ist.

Mit Hilfe der erfindungsgemäßen Ventilationsvorrichtung läßt sich zumindest teilweise ein Ausgleich zwischen dem Unterschallfeld und dem Überschallfeld, und zwar durch eine sich selbsttätig ausbildende Sekundärströmung, erzielen, wodurch ein Teil der Grenzschicht hinter dem Stoß abgesaugt und vor dem Stoß wieder ausgeblasen wird. Diese Sekundärströmung hat eine zusätzliche Verdickung der Grenzschicht vor dem Stoß zur Folge und bewirkt außerdem eine Verringerung der Ablösetendenz der Grenzschicht hinter dem Verdichtungsstoß. Aufgrund der zusätzlichen Grenzschichtverdickung ergibt sich eine stärkere Krümmung der Verdrängungsstromlinie im Stoßbereich und als Folge davon eine Abflachung des Druckanstieges im Stoßbereich und eine Verstärkung der Nachexpansion hinter dem Verdichtungsstoß mit der Verschiebung der stoßinduzierten Grenzschichtablösung zu höheren Vorstoß-Machzahlen. Außerdem bewirkt die zusätzliche Grenzschichtverdickung eine Verstärkung der Kompressionswellen vor dem Stoß mit der Tendenz zur Senkung der Vorstoß-Machzahl.

Mit der erfindungsgemäßen Ventilationsvorrichtung, wovon Weiterbildungen und vorteilhafte Ausgestaltungen in den Unteransprüchen aufgeführt sind, ist es bei einem überkritischen Tragflügel möglich, sowohl eine Widerstandsverringerung im "Off-design-Bereich" (Machzahl und Anstellwinkel außerhalb des Auslegefalls) als auch eine Erweiterung des "Off-design-Bereiches" zu erzielen. Die Widerstandsverringerung im "Off-design-Bereich", welche auf einer Abflachung des Druckanstieges im Stoßbereich sowie auf einer Senkung der Vorstoß-Machzahl und damit auf der Reduzierung des Wellenwiderstandes beruht, kann bis zu 40 % des Profilwiderstandes betragen. Bei einem mit der erfindungsgemäßen Ventilationsvorrichtung ausgerüsteten überkritischen Tragflügel treten daher bei vom Auslegefall abweichenden Flugzuständen nicht die bisher üblichen Gleitzahlverschlechterungen auf, so daß auch im "Off-design-Bereich" wirtschaftliches Fliegen möglich wird.

Die Erweiterung des "Off-design-Bereiches" ergibt sich aus der Verzögerung der stoßinduzierten Ablösung zu höheren Vorstoß-Machzahlen und damit aus der Verschiebung des steilen Widerstandsanstieges sowie der Schüttelgrenze zu größeren Auftriebswerten. Dies ist durch Absaugen der Grenzschicht, wie in der DE-A- 29 49 133 vorgeschlagen, auch möglich, aber mit Hilfe aktiver, energieverbrauchender Maßnahmen. Die erfindungsgemäße Lösung benötigt zur hinreichenden Erweiterung des "Off-design-Bereiches" lediglich passive, d.h. keine energieverbrauchenden Maßnahmen. Da bei einem überkritischen Tragflügel das Niveau der Buffet-Grenze (Schüttelgrenze) für die Auslegung dimensionierend wirkt, kann mit der erfindungsgemäßen Lösung eine Erhöhung des Auslege-Auftriebbeiwertes und damit eine Verbesserung der Auslege-Gleitzahl erzielt werden.

Die mit der Erfindung erzielbaren Vorteile lassen sich nicht nur bei im hohen Unterschallbereich fliegenden Verkehrs- und Transportflugzeugen sinnvoll benutzen, sondern auch bei militärischen Flugzeugen, und zwar, um die Flugleistungen im transsonischen Geschwindigkeitsbereich zu verbessern. Insbesondere können Interferenzwiderstände von an einem Flügel angebrachten Außenbehältern und Gondeln, die durch lokale stoßbehaftete Überschallfelder der Interferenzströmung zwischen dem Flügel und den angebrachten Teilen verursacht werden, durch die Anordnung der erfindungsgemäßen Ventilationsvorrichtung im Bereich der Stöße drastisch reduziert werden. Dabei ist es auch möglich, die Perforation auf der Innenseite der Wandstreifen mit Hilfe einer Blende zu verschließen.

Die Erfindung wird anhand der beiliegenden Zeichnung näher erläutert.

Es zeigen:

Fig. 1 eine Draufsicht auf einen Ausschnitt eines Luftfahrzeuges mit einem überkritischen Tragflügel,

Fig. 2 einen Querschnitt durch den überkritischen Tragflügel gemäß Fig. 1,

Fig. 3a die Grenzschicht eines überkritischen Tragflügels im Bereich eines Verdichtungsstoßes,

Fig. 3b die Grenzschicht eines mit einer Ventilationsvorrichtung versehenen überkritischen Tragflügels im Bereich des Verdichtungsstoßes,

Fig. 4a ein Diagramm zur Darstellung gemessener Druckverteilungen unterhalb der Schüttelgrenze,

Fig. 4b ein Diagramm zur Darstellung gemessener Druckverteilungen oberhalb der Schüttelgrenze,

Fig. 5 ein Diagramm der Widerstandsbeiwerte eines überkritischen Tragflügelprofils,

Fig. 6 ein Diagramm der Auftriebsbeiwerte eines überkritischen Tragflügelsprofils und

Fig. 7 ein Diagramm der Schüttelgrenze eines überkritischen Tragflügelprofils in Abhängigkeit der Machzahl der Strömung.

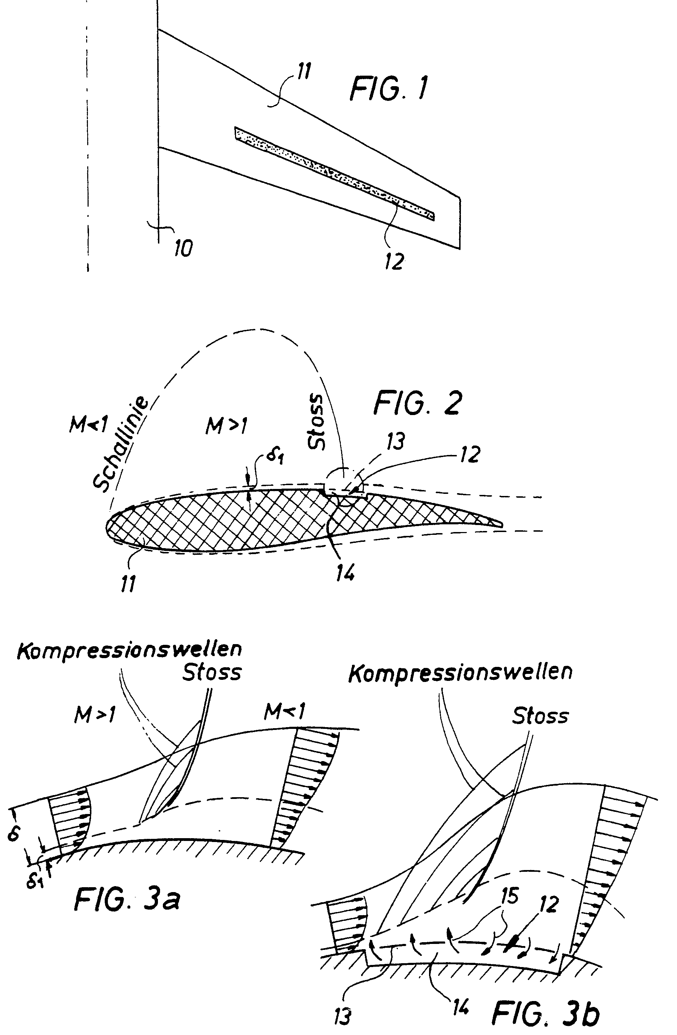

In der Draufsicht nach Fig. 1 ist ein Ausschnitt eines Luftfahrzeuges zu sehen, bestehend aus einem Rumpf 10 und einem überkritischen Tragflügel 11. Im Tragflügel 11 ist eine Ventilationsvorrichtung 12 vorgesehen, die sich auf der Profiloberseite nur über einen Teil der Spannweite, und zwar über den durch die Verdichtungsstöße am höchsten belasteten Teil, erstreckt. Die Position der Ventilationsvorrichtung 12 in der Flügeltiefe hängt von der durch die Profilierung bedingten Stoßlage ab. Diese Stoßlage liegt bei modernen überkritischen Tragflügeln zwischen 50 % bis 70 % der Flügel tiefe, und daher ist die Ventilationsvorrichtung 12 so plaziert, daß der auftretende Stoß bei der Auslege-Machzahl und maximalem Anstellwinkel etwa in der Mitte der Ventilationsvorrichtung auftritt. Die Breite der aus einem perforierten Wandstreifen 13 mit darunter liegender flacher Ausgleichskammer 14 bestehenden Ventilationsvorrichtung wird von der Ausdehnung des Stoß-Grenzschicht-Interferenzbereiches in Richtung der Flügeltiefe und von der Stoßwanderung im "Off-design-Bereich" bestimmt, und sie beträgt vorzugsweise 5 % der Flügeltiefe plus der Wanderungsbreite des Stoßes im "Off-design-Bereich". Diese Wanderungsbreite beträgt bei modernen überkritischen Tragflügeln nur wenige Prozent der Flügeltiefe. Bei einer besonderen Ausführungsform der Erfindung ist die Ventilationsvorrichtung im Bereich der Flügelspoiler bzw. in den Flügelspoilern untergebracht.

Wie aus der Darstellung nach Fig. 2, welche einen vergrößerten Querschnitt des Tragflügels 11 zeigt, hervorgeht, besteht die Ventilationsvorrichtung 12 aus dem perforierten Wandstreifen 13 mit darunter liegender Ausgleichskammer 14. Aus Fig. 2 ist auch der Verlauf der Schallinie des angeströmten Tragflügels 11 zu sehen, wobei auch zu erkennen ist, daß diese Schallinie von der Nase ausgeht und im Bereich der Ventilationsvorrichtung 12 endet. Die Perforation im Wandstreifen 13 kann durch hexagonal angeordnete Löcher oder durch in Flügelspannweite gerichete Schlitze gebildet sein, mit einem Flächenverhältnis von 5 % bis 20 % der Fläche des Wandstreifens. Fig. 2 zeigt auch, daß die Ausgleichskammer 14 sehr flach ist, da die Durchflußmenge der Sekundärströmung relativ gering ist. Zur Vermeidung eines Druckausgleichs in Spannweitenrichtung ist die Ausgleichskammer 14 in nicht näher dargestellter Weise unterteilt.

Fig. 3a zeigt die Strömungsverhältnisse eines überkritischen Tragflügels im Bereich des Verdichtungsstoßes. Aus dieser Darstellung kann man erkennen, daß die Grenzschichtdicke δ und die Grenzschichtverdrängungsdicke δ₁ durch den Verdichtungsstoß zunehmen. Fig. 3b zeigt, daß durch die Sekundärströmung 15 aufgrund der Ventilationsvorrichtung 12 eine erhebliche Zunahme der Grenzschichtverdrängungsdichte δ₁ erreicht wird. Hierdurch wird, wie bereits erwähnt, eine stärkere Krümmung der Verdrängungsstromlinie im Stoßbereich und eine Verstärkung der Kompressionswellen vor dem Stoß erzielt und damit der Druckanstieg in diesem Bereich abgeflacht sowie eine Verschiebung der stoßinduzierten Grenzschichtablösung zu höheren Vorstoß-Machzahlen bewirkt.

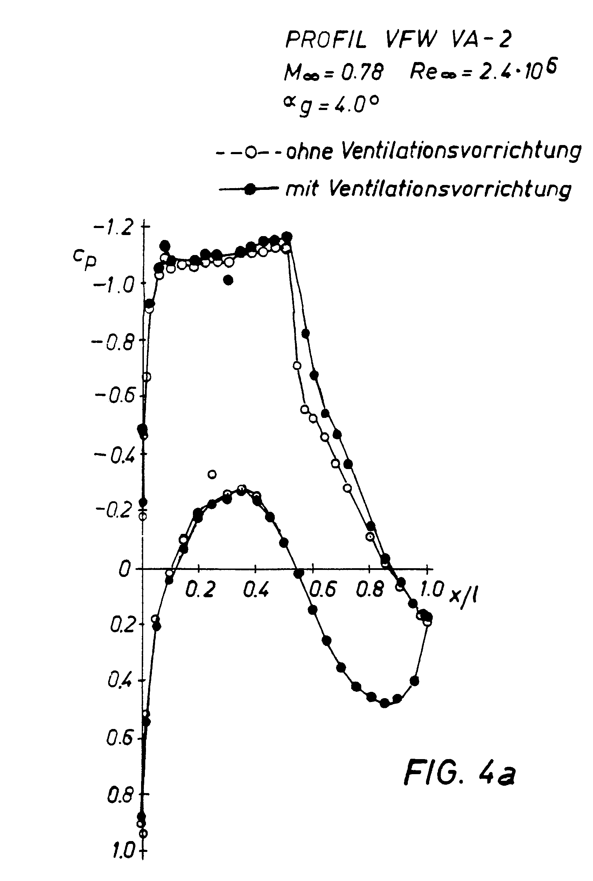

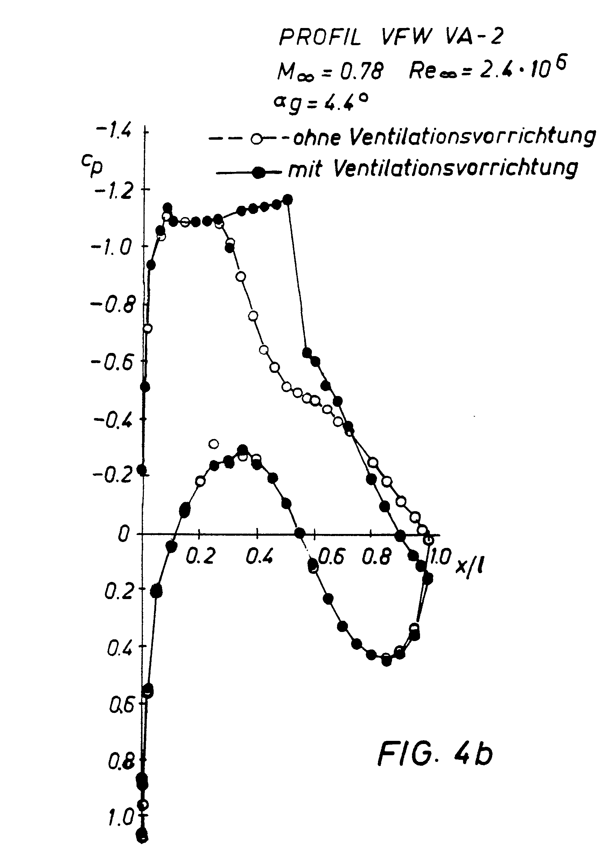

Fig. 4a und Fig. 4b zeigen in je einem Diagramm gemessene Druckverteilungen für ein bestimmtes überkritisches Tragflügelprofil mit und ohne Ventilationsvorrichtung. Während Fig. 4a den Druckverlauf unterhalb der Schüttelgrenze zeigt, ist in Fig. 4b der Druckverlauf oberhalb der Schüttelgrenze ohne Ventilation abgebildet. Der Unterschied ist durch die verschiedenen Anstellwinkel δ g des Profils gegeben. Beide Diagramme zeigen deutlich die Wirkung der Ventilationsvorrichtung auf die Druckverteilung. Während in Fig. 4a die durch die Ventilationsvorrichtung verursachte Abflachung des Druckanstieges im Stoßbereich zu erkennen ist, wird in Fig. 4b die Verzögerung der stoßinduzierten Ablösung bei höherem Anstellwinkel durch die Ventilationsvorrichtung deutlich.

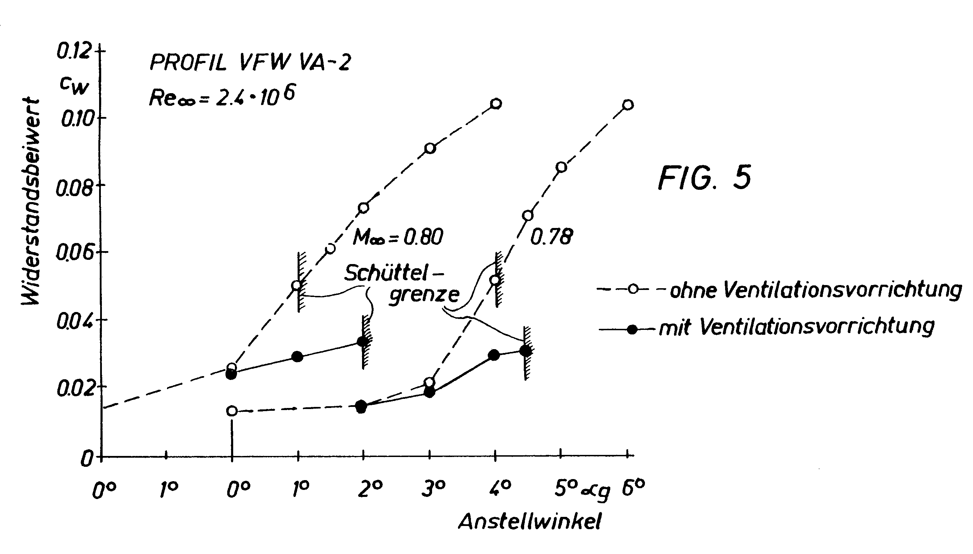

Im Diagramm nach Fig. 5 ist der Verlauf der Widerstandsbeiwerte überkritischer Tragflügelprofile bei zwei verschiedenen Machzahlen mit und ohne Ventilationsvorrichtung abgebildet. Beide Kurvenzüge zeigen, daß beim Einsatz der erfindungsgemäßen Ventilationsvorrichtung der Widerstandsanstieg im "Off-design-Bereich", ausgehend vom Auslege-Anstellwinkel, wesentlich geringer ist und daß sich die Schüttelgrenze zu größeren Anstellwinkeln verschiebt.

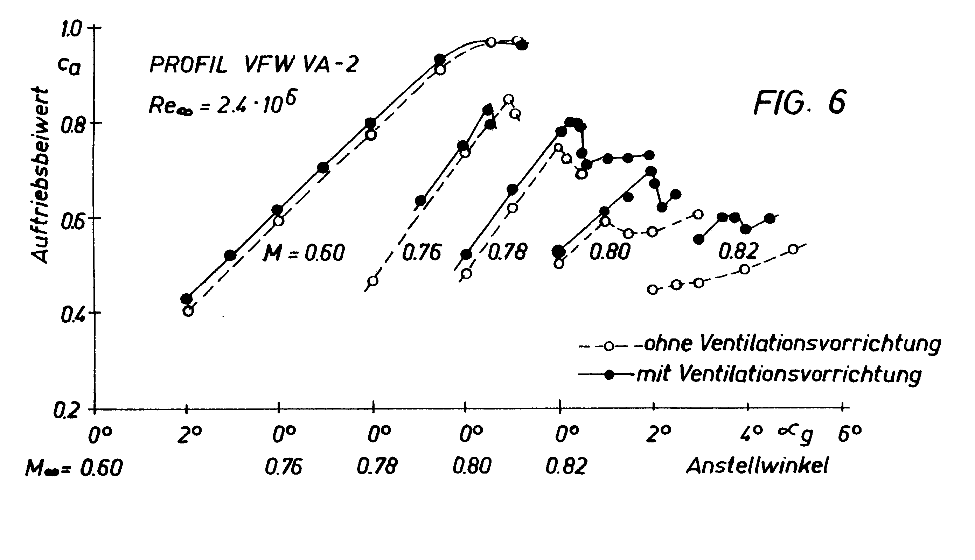

Fig. 6 zeigt in einem Diagramm den Auftriebswert eines überkritischen Tragflügelprofils mit und ohne Ventilationsvorrichtung bei verschiedenen Machzahlen. Aus diesem Diagramm kann man erkennen, daß die Auftriebsbeiwerte bei Profilen mit Ventilationsvorrichtung, insbesondere oberhalb der Auslege-Machzahl, höher sind als bei denjenigen ohne Ventilationsvorrichtung.

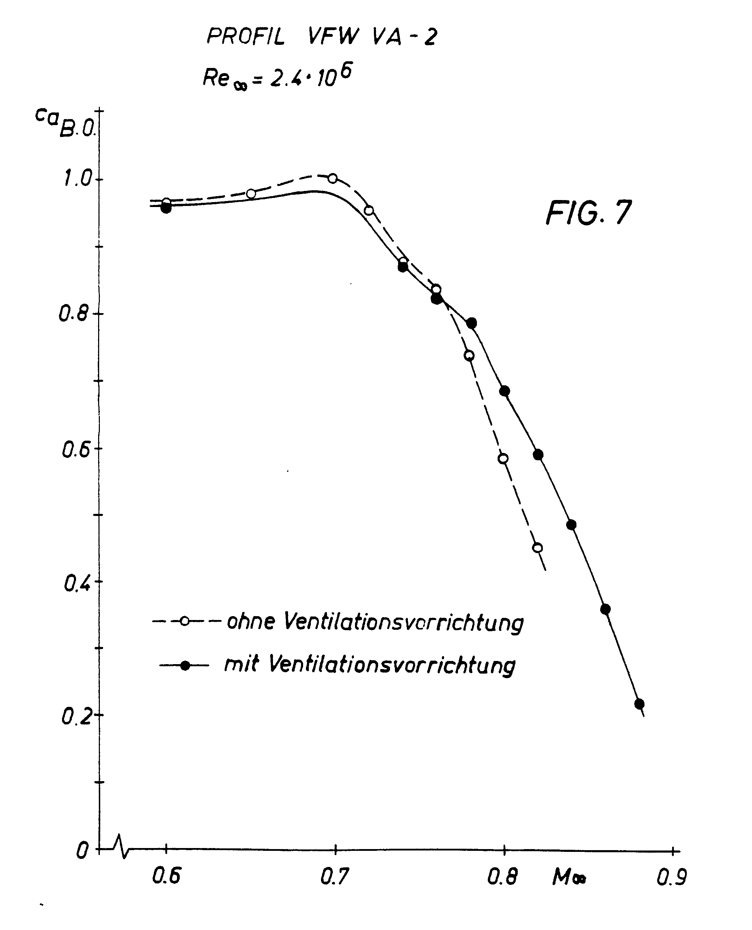

Im letzten Diagramm nach Fig. 7 ist die Schüttelgrenze eines überkritischen Tragflügelprofils über der Machzahl der Strömung aufgetragen. Dieses Diagramm zeigt, daß die Schüttelgrenzen sich bei geringen Machzahlen kaum unterscheiden, jedoch oberhalb der Auslege-Machzahl wesentlich besser bei Tragflügeln mit Ventilationsvorrichtung sind.

**Patentansprüche**

1. Tragflügel für Luftfahrzeuge mit überkritischer Profilierung, welcher auf der Oberseite in einem definierten Bereich der Profiltiefe eine Vorrichtung zur Beeinflussung des Verdichtungsstoßes aufweist, dadurch gekennzeichnet, daß die Vorrichtung als Ventilationsvorrichtung (12) zum Ausgleich der Druckdifferenz zwischen Überschallfeld und Unterschallfeld ausgebildet ist, daß die Ventilationsvorrichtung (12) aus einem in Richtung der Flügelspannweite sich erstreckenden perforierten Wandstreifen (13) mit darunterliegender Ausgleichskammer (14) besteht, und daß die Breite des perforierten Wandstreifens (13) - in Richtung der Flügeltiefe gemessen-auf einen Wert zwischen 5 % bis 20 % der örtlichen Flügeltiefe bemessen ist.

2. Tragflügel nach Anspruch 1, der dadurch gekennzeichnet ist, daß der perforierte Wandstreifen (13) mit seiner Mitte zwischen 50 % bis 70 % der Flügeltiefe (Stoßlage) auf der Flügeloberseite angeordnet ist.

3. Tragflügel nach einem der Ansprüche 1 und 2, dadurch gkennzeichnet, daß die aus perforiertem Wandstreifen (13) und Ausgleichskammer (14) bestehende Ventilationsvorrichtung (12) über einen Tiel der Flügelspannweite angeordnet ist.

4. Tragflügel nach einem der Ansprüche 1 bis 3, dadurch gekennzeichnet, daß die Ventilationsvorrichtung (12) in Spoilern an entsprechender Position des Tragflügels (11) untergebracht ist.

5. Tragflügel nach einem der Ansprüche 1 bis 4, dadurch gekennzeichnet, daß die Ausgleichskammer (14) der Ventilationsvorrichtung (12) in Richtung der Flügelspannweite durch Zwischenwände unterteilt ist.

6. Tragflügel nach einem der Ansprüche 1 bis 5, dadurch gekennzeichnet, daß die Wandstreifen (13) durch hexagonal verteilte Löcher mit einem Flächenverhältnis von 5 % bis 20 % der Wandstreifenfläche perforiert sind.

7. Tragflügel nach einem der Ansprüche 1 bis 5, dadurch gekennzeichnet, daß die Wandstreifen (13) durch in Richtung der Flügelspannweite angeordnete Schlitze mit einem Flächenverhältnis von 5 % bis 20 % zur Wandstreifenfläche perforiert sind.

8. Tragflügel nach einem der Ansprüche 1 bis 7, dadurch gekennzeichnet, daß die Perforation der Wandstreifen (13) durch auf der Innenseite vorgesehene Blenden verschließbar ist.

9. Tragflügel nach einem der vorhergehenden Ansprüche, dadurch gekennzeichnet, daß die Ventilationsvorrichtung (12) in Außenbehältern und/oder Gondeln der Tragflügel (11) zur Beeinflussung der Interferenzströmung lokale Verdichtungsstöße auslösender Überschallfelder angeordnet ist.

**Claims**

1. An aircraft wing, having very critical profiling and comprizing on the top side, in a specific area of the profile chord, a device for influencing the compression shock, characterized in that the said device takes the form of a ventilating device (12) for equalizing the differential pressure between the supersonic and the subsonic fields, that the said ventilating device (12) is comprized of a perforated wall strip (13), which extends along the direction of the wing span, having an equalizing chamber (14) underneath it, and that the width of the perforated wall strip (13), measured in the direction of the wing chord, has a value between 5 and 20 % of the local wing chord.

2. A wing as claimed in Claim 1, which is characterized in that the centre of the perforated wall strip (13) is arranged at between 50 and 70 % of the wing chord (shock position) on the wing upper surface.

3. A wing as claimed in either of Claims 1 and 2, <u>characterized in that</u> the ventilating device (12), comprizing the perforated wall strip (13) and the equalizing chamber (14), is arranged across a portion of the wing span.

4. A wing as claimed in any of Claims 1 through 3, <u>characterized in that</u> the ventilating device (12) is housed in spoilers at a suitable position in the wing (11).

5. A wing as claimed in any of Claims 1 through 4, <u>characterized in that</u> the equalizing chamber (14) of the ventilating device (12) is divided up in the direction of the wing span by partitions.

6. A wing as claimed in any of Claims 1 through 5, <u>characterized in that</u> the wall strips (13) are perforated with holes spaced out hexagonally, having an area ratio of 5 to 20 % of the wall strip surface.

7. A wing as claimed in any of Claims 1 through 5, <u>characterized in that</u> the wall strips (13) are perforated by slots arranged in the direction of the wing span, having an area ratio of 5 to 20 % to the wall strip surface.

8. A wing as claimed in any of claims 1 through 7, <u>characterized in that</u> the perforation of the wall strips (13) can be closed off by diaphragms provided on the inside.

9. A wing as claimed in any one of the foregoing claims, <u>characterized in that</u> the ventilating device (12) is arranged in external tanks and/or nacelles on the wing (11), for influencing the interference flow of supersonic fields which initiate local compression shocks.

### Revendications

1. Aile pour aéronef à profil surcritique, qui présente sur l'extrados, dans une zone déterminée de la largeur du profil, un dispositif pour influencer le choc de compression, aile caractérisée en ce que le dispositif est en forme de dispositif de ventilation (12) pour équilibrer la différence de pression entre la zone subsonique et la zone supersonique, le dispositif de ventilation (12) se composant d'one bande de paroi (13) perforée s'étendant dans le sens de l'aile, et en-dessous de laquelle se trouve une chambre de compensation (14), la largeur de la bande de paroi perforée (13) mesurée dans la direction de la largeur de l'aile correspondant à une valeur comprise entre 5 % et 20 % de la largeur locale de l'aile.

2. Aile selon la revendication 1, caractérisée en ce que la bande de paroi perforée (13) est située sur le côte extrados de l'aile et son milieu se trouve à un emplacement situé entre 50 % jusqu'à 70 % de la largeur de l'aile (position du choc).

3. Aile selon l'une des revendications 1 et 2, caractérisée en ce que le dispositif de ventilation (12) composé de la bande de paroi perforée (13) de la chambre de compensation (14) est prévue sur une partie de la longueur de l'aile.

4. Aile selon l'une des revendications 1 à 3, caractérisée en ce que le dispositif de ventilation (12) est logé dans les aérofreins, dans la position correspondante de l'aile (11).

5. Aile selon l'une des revendications 1 à 4, caractérisée en ce la chambre de compensation (14) du dispositif de ventilation (12) est subdivisée dans la direction de la longueur de l'aile par des cloisons.

6. Aile selon l'une des revendications 1 à 5, caractérisée en ce que les bandes de paroi (13) sont perforées par des trous à répartition hexagonale représentant en surface, de 5 à 20 % de la surface de la bande de paroi.

7. Aile selon l'une des revendications 1 à 5, caractérisée en ce que les bandes (13) sont perforées par des fentes dirigées dans la direction de la longueur de l'aile et avec un rapport de surface compris entre 5 % et 20 % de la surface de la bande de paroi.

8. Aile selon l'une des revendications 1 à 7, caractérisée en ce la perforation des bandes (13) est susceptible d'être fermée par des caches situés du côte intérieur.

9. Aile selon l'une quelconque des revendications précédentes, caractérisée en que le dispositif de ventilation (12) est prévu dans des réservoirs exérieurs et/ou des nacelles sur l'aile (11) pour chocs de compression locaux.

FIG. 1

FIG. 2

FIG. 3a

FIG. 3b

PROFIL VFW VA-2
$M_\infty = 0.78$   $Re_\infty = 2.4 \cdot 10^6$
$\alpha_g = 4.0°$

--o-- ohne Ventilationsvorrichtung

—•— mit Ventilationsvorrichtung

FIG. 4a

PROFIL VFW VA-2
$M_\infty = 0.78$   $Re_\infty = 2.4 \cdot 10^6$
$\alpha g = 4.4°$

-- o -- ohne Ventilationsvorrichtung
— ● — mit Ventilationsvorrichtung

FIG. 4b

FIG. 5

PROFIL VFW VA-2
$Re_\infty = 2.4 \cdot 10^6$

$M_\infty = 0.80$

0.78

Schüttel-grenze

ohne Ventilationsvorrichtung
mit Ventilationsvorrichtung

$c_w$ Widerstandsbeiwert

0.12, 0.10, 0.08, 0.06, 0.04, 0.02, 0

Anstellwinkel

0° 1° 2° 3° 4° 5° $\alpha_g$ 6°

7

FIG. 6

PROFIL VFW VA-2

$Re_\infty = 2.4 \cdot 10^6$

ohne Ventilationsvorrichtung

mit Ventilationsvorrichtung

$c_a$

Auftriebsbeiwert

Anstellwinkel

$\alpha_g$

$M_\infty = 0.60$   0.76   0.78   0.80   0.82

0126199

PROFIL VFW VA - 2

$Re_\infty = 2.4 \cdot 10^6$

$ca_{B.0.}$

*FIG. 7*

---○--- ohne Ventilationsvorrichtung

——●—— mit Ventilationsvorrichtung

$M_\infty$